# EUROPÄISCHE PATENTSCHRIFT

(11) **EP 0 379 679 B1**
(45) Veröffentlichungstag und Bekanntmachung des Hinweises auf die Patenterteilung: **03.01.1996**
(21) Anmeldenummer: 89122120.2
(22) Anmeldetag: 30.11.1989
(51) Int. Cl.: D03D 49/00

(54) **Schwingungsisolierte Webmaschine mit Niveauregelung**
Vibration-insulated loom with level adjustment
Métier à tisser isolé vibratoirement avec régulation de niveau

(30) Priorität: 12.01.1989 DE 8900312 U
(43) Veröffentlichungstag der Anmeldung: 01.08.1990
(73) Patentinhaber: LINDAUER DORNIER GESELLSCHAFT M.B.H, D-88131 Lindau (DE)
(72) Erfinder: Breyer, Werner, Dipl.-Ing., D-8990 Lindau/B. (DE)
(74) Vertreter: Riebling, Peter, Dr.-Ing., Patentanwalt

(56) Entgegenhaltungen:
- EP-A- 0 027 195
- EP-A- 0 139 773
- DE-A- 2 642 522
- DE-A- 3 604 991
- DE-U- 8 502 552

## Beschreibung

Die Erfindung betrifft eine Schwingungsisolierte Webmaschine mit Niveauregelung mit Jacquardmaschine nach dem Oberbegriff des Schutzanspruches 1.

Aus dem DE-GM 85 02 552.6 des Anmelders ist bereits eine Schwingungsisolierte Webmaschine bekannt, wobei von den Maschinenfüßen der Wabmaschine ausgehend in Abstützung von der Aufstellungsebene Federpakete vorgesehen sind in Verbindung mit einem hydraulischen Dämpfer.

Diese Art der Schwingungsisolierung ist aber nicht für Webmaschinen geeignet die mit einer ortsfesten darüber angeordneten Jacquardmaschine zusammenarbeiten, insbesondere weil die Schwingungsdämpfer nicht geeignet waren die Webmaschine während des Webvorganges nach Art einer Niveauregulierung nachzustellen.

Eine weitere Schwingungsisolierung für Webmaschinen ist aus der EP 0 139 773 A1 bekannt. Dort werden von den Maschinenfüßen der Webmaschine ausgehend auf einer Seite zwar Luftfeder vorgesehen die aber nur dazu dienen, eine besonders weiche Lagerung der Webmaschine auf einer Seite zu schaffen. Diese können geregelt werden, um die Nivellierung der Maschine einzustellen.

In Verbindung mit einer darüber angeordneten Jacquardmaschine sind die bisher bekannten Vorrichtungen zur Schwingungsisolierung an den Maschinenfüßen der Webmaschine nicht geeignet.

Das System nach EP 0 139 773 A1 ist auch für Jacquardmaschinen geeignet, allerdings bei weniger Isolierwirkung.

Soll nämlich eine Webmaschine mit einer darüber angeordneten Jacquardmaschine verwendet werden, dann ergeben sich in Bezug auf die Schwingungsdämpfung der Webmaschine besondere Probleme.

Das Maschinengewicht einer derartigen Webmaschine ist nie gleich. Der Kettbaum wird mit zunehmendem Warenablaß abgewickelt und hierdurch leichter. Der Tuchbaum wird während des Webvorganges mehrmals ausgewechselt, so daß mit fortschreitendem Webvorgang das Maschinengewicht insgesamt leichter gegenüber der Aufstellungsfläche wird.

Verwendet man nun eine derartige bekannte Webmaschine zusammen mit einer darüber angeordneten, ortsfesten Jacquardmaschine, dann bestand bei den bisher bekannten Schwingungssystemen der Nachteil, daß aufgrund des sich vermindernden Maschinengewichtes das Auflagegewicht der Maschine gegenüber den Schwingungsdämpfern vermindert wurde und die Maschine hierdurch ihren Abstand zur Aufstellungsebene vergrößerte, wodurch gleichzeitig der Abstand zu den Harnischfäden der darüber angeordneten Jacquardmaschine vermindert wurde.
Damit wurde die Fachbildung der Webmaschine aufgrund der sich verkürzenden Harnischfäden nachteilig verändert.
Umgekehrt wurde die Maschine schwerer, wenn nach vollständig entleertem Kettbaum ein neuer Kettbaum aufgelegt wurde, wodurch die oben beschriebenen Vorgänge in umgekehrter Weise abliefen.

Der vorliegenden Erfindung liegt deshalb die Aufgabe zugrunde, eine Schwingungsisolierte Webmaschine der eingangs genannten Art so weiterzubilden, daß in Verbindung mit einer Jacquardmaschine eine Beeinträchtigung der Fachbildung bei sich veränderndem Maschinengewicht vermieden wird.

Zur Lösung der gestellten Aufgabe ist die Erfindung durch die Merkmale der Ansprüche 1 und 2 gekennzeichnet, wobei die Maschine einen stets gleichen Abstand zu der darüber angeordneten Jacquardmaschine einnimmt.

Mit der gegebenen Erfindung wird ein vollständig neuer Effekt erzielt, denn es wird nun in Abhängigkeit vom Gewicht der Maschine, welches die Maschine auf den einen oder mehreren niveauregulierbaren Schwingungsdämpfer ausübt, der Abstand zur darüber angeordneten Jacquardmaschine stets konstant gehalten.

Damit wird eine nachteilige Abstandsveränderung der Fachbildungsorgane der Webmaschine in Bezug zu der darüber angeordneten Jacquardmaschine vermieden und es wird ein Gewebe stets gleichbleibender Qualität erzeugt.

In einer besonders bevorzugten Ausführungsform der vorliegenden Erfindung ist es vorgesehen, daß mindestens zwei niveauregulierbare Schwingungsdämpfer parallel zueinander geschaltet sind, unterhalb der Webmaschine angeordnet sind und zwar im Schwerpunkt des Kettbaumes. Damit wird das sich verändernde Kettbaumgewicht optimal ausgeglichen, denn durch die diesen Schwingungsdämpfern zugeordnete Niveauregulierung wird die Veränderung des Kettbaumgewichts erfasst und den Schwingungsdämpfern mitgeteilt, daß die Abstützhöhe dieser Schwingungsdämpfer entsprechend dem Gewicht des Kettbaumes eingestellt wird.

Von besonderem Vorteil hierbei ist, daß die anderen, der Webmaschine zugeordneten Schwingungsdämpfer nicht niveaureguliert zu sein brauchen.

In einer zweiten Ausführungsform der vorliegenden Erfindung ist es vorgesehen, daß die niveauregulierbaren Schwingungsdämpfer um den Schwerpunkt der gesamten Webmaschine herum angeordnet sind, wobei dann mehrere niveauregulierbare Schwingungsdämpfer die Abstützfunktion und gleichzeitig die Niveauregulierung übernehmen.

Diese Anordnung erfordert einen höheren technischen Aufwand, weil ja sämtliche Schwingungsdämpfer dann niveaureguliert sein müssten.

Das letztgenannte Ausführungsbeispiel ist so zu verstehen, daß der Schwerpunkt der Maschine selbst als Bezugspunkt aufgefasst wird, d.h. die niveauregulierten Schwingungsdämpfer müssten z.B.an den vier Ecken der Maschine angeordnet sein, um die Gewichtsveränderung des Schwerpunktes auszugleichen.

Als Ausführungsformen für die niveauregulierbaren Schwingungsdämpfer sind in einer bevorzugten Ausführungsform Luftfedern vorgesehen. Diese Luftfedern sind besonders einfach einsetzbar und einfach mit einem pneumatischen Steuerventil kombinierbar, wobei das Fühlorgan dieses Steuerventils den Abstand gegenüber der Bodenfläche erfasst und entsprechend dem Abstand der Webmaschine zur Bodenfläche die Luftfedern mit Druck beaufschlagen.

Hierbei wird es bevorzugt, wenn das Maschinengewicht von parallel zu den Luftfedern angeordneten Stahlfedern aufgenommen wird und die Luftfedern selbst nur die Niveauregulierung übernehmen in Abhängigkeit von dem sich verändernden Kettgewicht.
Selbstverständlich tragen die Luftfedern aufgrund ihrer Kompressibilität zur Schwingungsisolierung bei.

In einer anderen Ausführungsform der vorliegenden Erfindung ist es vorgesehen, die niveauregulierbaren Elemente als Hydraulikelemente auszubilden, z.B. als Kolben-Zylinder-Anordnung, deren Füllungsgrad in Abhängigkeit von der gewünschten Niveauregulierung einstellbar ist.

Ein derartiger Hydraulikzylinder könnte entweder auf ein weiteres Luftpolster wirken oder mit einer weiteren Feder kombiniert werden, um eine Schwingungsisolierung zu erreichen.

In einer bevorzugten Ausführungsform der vorliegenden Erfindung wird bevorzugt wegen der einfacheren Handhabung der Abstand des unteren Maschinenrahmens der Webmaschine zur Aufstellungsfläche erfasst und der Niveauregulierung als Ist-Signal eingespeist.

In einer anderen Ausführungsform der vorliegenden Erfindung ist der Abstand zwischen dem oberen Webmaschinenrahmen oder einem oberen Bezugspunkt der Webmaschine in Bezug zu der darüber angeordneten ortsfesten Jacquardmaschine erfasst und der Niveauregulierung eingespeist.

Die vorliegende erfindungsgemässe Schwingungsisolierung ist als relativ weiche und damit hochwirksame Schwingungsisolierung anzusehen. Sie ist damit den harten, ansich bekannten, unter dem Kettbaum angeordneten Schwingungsdämpfern weit überlegen. Bisher hatte man nämlich unter dem Kettbaum , um unterschiedliche Kettbaumgewichte ausgleichen zu können, harte Schwingungsdämpfer verwendet, die in ihren Dämpfungseigenschaften ungenügend waren.

Hier setzt die Erfindung ein, die mit ihren überlegenen Dämpfungseigenschaften den bisher bekannten Systemen weit überlegen ist.

Im folgenden wird die Erfindung anhand von lediglich einen Ausführungsweg darstellende Zeichnungen näher erläutert. Hierbei gehen aus den Zeichnungen und ihrer Beschreibung weitere Merkmale und Vorteile der Erfindung hervor.

Die Figuren 1 bis 3 zeigen eine bevorzugte Ausführungsform der vorliegenden Neuerung.

Es zeigen:
- Figur 1:: schematisiert eine Webmaschine mit einer darüber angeordneten Jacquardmaschine;
- Figur 2:: schematisiert in Seitenansicht die eine Seite der Webmaschine in ihrem bodenseitigen Teil;
- Figur 3:: die Draufsicht auf die Abstützung des Maschinengestells der Webmaschine in Bezug zur Aufstellungsebene.

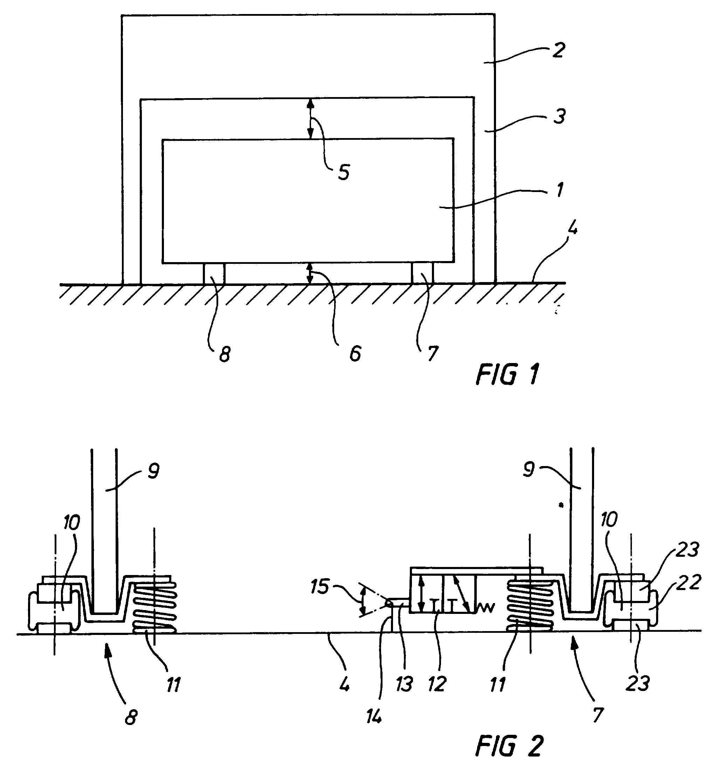

Gemäss Figur 1 ist eine Webmaschine 1 über Auflageelemente 7,8 im Abstand 6 veränderbar gegenüber einer Aufstellungsebene 4 angeordnet. Über der Webmaschine 1 ist ein Gerüst 3 angeordnet, auf dem die Jacquardmaschine 2 befestigt ist.

Erfindungsgemäss soll nun der Abstand 5 zwischen der Jacquardmaschine und der Webmaschine 1 konstant gehalten werden bei gleichzeitiger Schwingungsisolierung.

Dies wird nach dem Ausführungsbeispiel der Zeichnung durch Konstanthaltung des Abstandes 6 erreicht in Verbindung mit niveauregulierbaren Schwingungsdämpfern.

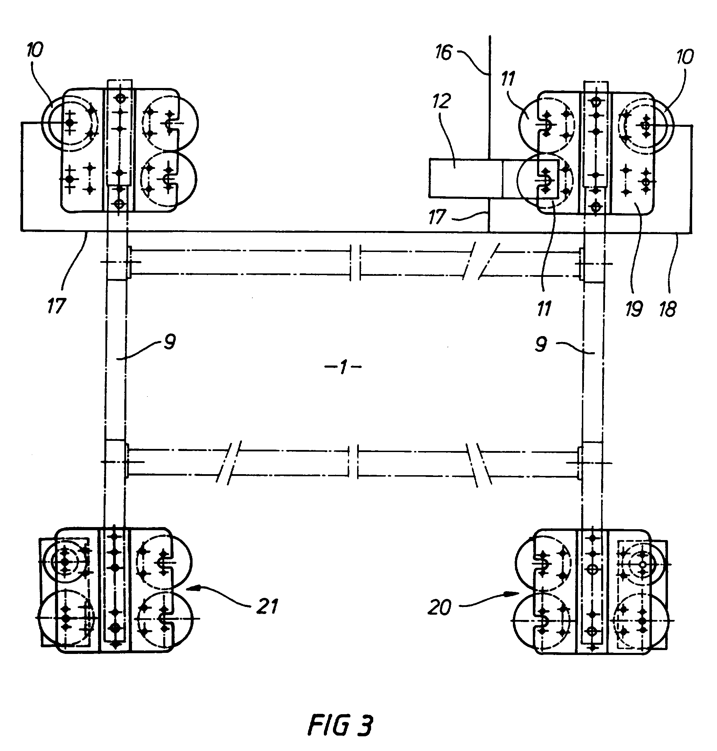

Die Figuren 2 und 3 zeigen eine mögliche konstruktive Ausführungsform.

Hierbei ist das Maschinengestell 9 der Webmaschine 1 über vier Auflageelemente 7,8 , 20,21 gegenüber der Aufstellungsebene 4 abgestützt.
Die beiden Auflageelemente 7,8 sind niveauregulierbar ausgebildet, während die Auflageelemente 20,21 als Stahlfedern ausgebildet sind und nicht niveauregulierbar sind.

Es ist selbstverständlich in einer anderen Ausführungsform der vorliegenden Neuerung vorgesehen, alle Auflageelemente 7,8,20,21 niveauregulierbar auszubilden. Aus Einfachheitsgründen reicht es jedoch aus, die Auflageelemente 7,8 unterhalb des Schwerpunktes des Kettbaumes am Maschinengestell 9 der Webmaschine 1 anzuordnen und die anderen Auflageelemente 20,21 nicht regulierbar zu gestalten.

Jedes Auflageelement 7,8 besteht hierbei aus einem Paket von Stahlfedern 11, die unterhalb einer gemeinsamen Tragplatte 19 angeordnet sind.

An der Tragplatte ist ferner eine Luftfeder 10 angeordnet. Jede Luftfeder 10 besteht aus einem mittleren Teil 22 aus einem elastischen Material, z.B. faserverstärkter Gummi oder dergleichen, der mit Luft gefüllt ist.

Dieser mittige Teil 22 wird eingefasst von oberen und unteren Teilen 23, die aus einem Kunststoffmaterial bestehen, die fest sind. Diese Teile 23 könnten auch aus Stahlmaterial oder einem anderen nicht kompressiblen Material bestehen. Die Teile 23 stützen sich hierbei auf dem mittigen, kompressiblen Teil 22 ab.

Durch Lufteinführung in den mittleren, kompressiblen Teil 22 wird damit die Abstützungshöhe dieser Luftfeder 10 bei sich ändernder Belastung konstant gehalten. Hierbei wird die Abstützungskraft im mittleren Teil 22 durch den eingeführten Luftdruck variiert.

Zur Steuerung des Luftdruckes ist hierbei eine Zuluftleitung 16 vorgesehen, die auf ein Regelventil 12 wirkt. Das Regelventil ist in einem bevorzugten Ausführungsbeispiel als 3/2-Wegeventil ausgebildet und weist einen Regulierhebel 13 auf, der mit einem Fühlstift 14 den bodenseitigen Abstand des Regulierhebels 13 abtastet. Der Fühlstift 14 sitzt hierbei direkt auf der Aufstellungsebene 4 auf und kann zusätzlich noch mit einem Gewicht belastet werden.

Der Regulierhebel 13 ist damit etwa im Bereich des Winkels 15 neigungseinstellbar, je nach Abstand der gesamten Anordnung zur Aufstellungsebene 4.

Wird beispielsweise durch ein Nachlassen des Kettbaumgewichts das Gewicht der gesamten Webmaschine leichter, dann schwenkt der Regulierhebel 13 im Gegenuhrzeigersinn und in Richtung zur Aufstandsfläche und es wird luft aus dem kompressiblen Teil 22 der Luftfedern 10 abgelassen, so daß hiernach wiederum ein gleicher Abstand 6 zur Aufstellungsebene 4 beibehalten wird.

Die Regulierung ist sehr feinfühlig.

Die beiden Luftfedern 10 sind über eine Verbindungsleitung 18 miteinander parallelgeschaltet, so daß die gesamte Webmaschinenseite niveaureguliert ausgebildet ist.

Die von dem 3/2-Wegeventil 12 ausgangsseitig abgegebene Luft wird über die Druckleitung 17 in die Verbindungsleitung 18 eingespeist.

## Patentansprüche

1. Schwingungsisolierte Webmaschine (1) mit einem Kettbaum und Niveauregulierung, wobei an den Maschinenfüßen der Webmaschine (1) gegenüber der Aufstellebene (4) Schwingungsdämpfer (7, 8, 20, 21) vorgesehen sind, die aus Federpaketen (11, 20, 21) bestehen in Verbindung mit niveauregulierbaren, hydraulischen Dämpfern oder Luftfedern (10),
dadurch gekennzeichnet, daß
die Maschine (1) über mindestens einen niveauregulierbaren Schwingungsdämpfer gegenüber der Aufstellebene (4) abgestützt ist, wobei dieser unterhalb der Webmaschine (1) im Schwerpunkt des Kettbaumes angeordnet ist, und hierbei die Maschine (1) einen stets gleichen Abstand (5) zu einer darüber angeordneten Jacquardmaschine (2) einnimmt.

2. Schwingungsisolierte Webmaschine (1) mit einem Kettbaum und Niveauregulierung, wobei an den Maschinenfüßen der Webmaschine (1) gegenüber der Aufstellebene (4) Schwingungsdämpfer (7, 8, 20, 21) vorgesehen sind, die aus Federpaketen (11, 20, 21) bestehen in Verbindung mit niveauregulierbaren, hydraulischen Dämpfern oder Luftfedern (10),
dadurch gekennzeichnet, daß
mehrere niveauregulierbare Schwingungsdämpfer um den Schwerpunkt der gesamten Webmaschine (1) herum angeordnet sind, welche die Abstützfunktion und gleichzeitig die Niveauregulierung übernehmen, sodaß die Maschine (1) einen stets gleichbleibenden Abstand (5) zu einer darüber angeordneten Jacquardmaschine (2) einnimmt.

3. Schwingungsisolierte Webmaschine nach Anspruch 1 oder 2,
dadurch gekennzeichnet, daß
mindestens zwei niveauregulierbare Schwingungsdämpfer parallel zueinander geschaltet sind.

4. Schwingungsisolierte Webmaschine nach den Ansprüchen 1 bis 3, **dadurch gekennzeichnet**, daß als niveauregulierbare Schwingungsdämpfer Luftfedern (22) vorgesehen sind, die in Verbindung mit einem pneumatischen Steuerventil (12) stehen, und vom Steuerventil (12) ausgehend Fühlorgane (13,14) vorgesehen sind, welche den Abstand (6) der Maschine (1) gegenüber der Bodenfläche (4) erfassen.

5. Schwingungsisolierte Webmaschine nach den Ansprüchen 1 bis 4, **dadurch gekennzeichnet**, daß zur Aufnahme des Maschinengewichts parallel zu den Luftfedern (22) angeordnete Stahlfedern (11) vorgesehen sind, wobei die Luftfedern (22) selbst zur Schwingungsisolierung und insbesondere zur Niveauregulierung vorgesehen sind in Abhängigkeit von dem sich verändernden Kettgewicht.

6. Schwingungsisolierte Webmaschine nach den Ansprüchen 1 bis 5, **dadurch gekennzeichnet**, daß die niveauregulierbaren Elemente als Hydraulikelemente ausgebildet sind mit einer Kolben-Zylinder-Anordnung, deren Füllgrad in Abhängigkeit von der gewünschten Niveauregulierung einstellbar ist.

7. Schwingungsisolierte Webmaschine nach Anspruch 6, **dadurch** **gekennzeichnet**, daß als Schwingungsisolierung der Hydraulikzylinder sich auf einem weiteren Luftpolster oder an einer zusätzlichen Feder abstützt.

## Claims

1. A weaving machine (1) insulated against vibrations, with a warp beam and level regulation, in which on the machine feet of the weaving machine (1) vibration dampers (7,8,20,21) are provided with respect to the erection plane (4), which vibration dampers (7,8,20,21) consist of sets of springs (11,20,21) in connection with level-adjustable, hydraulic dampers or air springs (10),
characterised in that
the machine (1) is supported via at least one level-adjustable vibration damper with respect to the erection plane (4), in which this is arranged beneath the weaving machine (1) in the centre of gravity of the warp beam, and in so doing the machine (1) has a constantly uniform distance (5) from a Jacquard machine (2) arranged thereabove.

2. A weaving machine (1) insulated against vibrations, with a warp beam and level regulation, in which on the machine feet of the weaving machine (1) vibration dampers (7,8,20,21) are provided with respect to the erection plane (4), which vibration dampers (7,8,20,21) consist of sets of springs (11,20,21) in connection with level-adjustable, hydraulic dampers or air springs (10),
characterised in that
several level-adjustable vibration dampers are arranged around the centre of gravity of the entire weaving machine (1), which undertake the supporting function and, at the same time, the level regulation, so that the machine (1) has a constantly uniform distance (5) from a Jacquard machine (2) arranged thereabove.

3. A weaving machine insulated against vibrations, according to Claim 1 or 2,
characterised in that
at least two level-adjustable vibration dampers are connected in parallel to each other.

4. A weaving machine insulated against vibrations, according to Claims 1 to 3,
characterised in that
as level-adjustable vibration dampers air springs (22) are provided, which are connected with a pneumatic control valve (12) and starting from the control valve (12) sensor devices (13,14) are provided, which pick up the distance (6) of the machine (1) with respect to the base surface (4).

5. A weaving machine insulated against vibrations, according to Claims 1 to 4,
characterised in that
to receive the machine weight, steel springs (11) are provided, arranged parallel to the air springs (22), in which the air springs (22) themselves are provided for insulation against vibrations and in particular for level regulation, as a function of the changing warp weight.

6. A weaving machine insulated against vibrations, according to Claims 1 to 5,
characterised in that
the level-adjustable elements are constructed as hydraulic elements with a piston-cylinder arrangement, the degree of admission of which is adjustable as a function of the desired level regulation.

7. A weaving machine insulated against vibrations, according to Claim 6,
characterised in that
as insulation against vibrations the hydraulic cylinder rests on a further air cushion or against an additional spring.

## Revendications

1. Métier à tisser (1) à isolation anti-vibratoire, comportant une ensouple et un réglage de niveau, pour lequel il est prévu, sur les pieds du métier (1), par rapport au plan de montage (4), des amortisseurs de vibrations (7, 8, 20, 21) qui se composent de blocs-ressorts (11, 20, 21) associés à des amortisseurs hydrauliques ou des ressorts pneumatiques (10) à réglage de niveau,
caractérisé en ce que le métier (1) est en appui par rapport au plan de montage (4) sur au moins un amortisseur de vibrations à réglage de niveau, étant précisé que cet amortisseur est disposé au-dessous du métier à tisser (1), au niveau du centre de gravité de l'ensouple, et que le métier (1) présente un écartement (5) toujours constant par rapport à un métier Jacquard (2) disposé au-dessus.

2. Métier à tisser (1) à isolation anti-vibratoire, comportant une ensouple et un réglage de niveau, pour lequel il est prévu, sur les pieds du métier (1), par rapport au plan de montage (4), des amortisseurs de vibrations (7, 8, 20, 21) qui se composent de blocs-ressorts (11, 20, 21) associés à des amortisseurs hydrauliques ou des ressorts pneumatiques (10) à réglage de niveau,
caractérisé en ce que plusieurs amortisseurs de vibrations à réglage de niveau sont disposés autour du centre de gravité de l'ensemble du métier à tisser (1), lesquels amortisseurs prennent en charge la fonction d'appui et en même temps le réglage de niveau, de sorte que le métier (1) présente un écartement (5) toujours constant par rapport à un métier Jacquard (2) disposé au-dessus.

3. Métier à tisser à isolation anti-vibratoire selon la revendication 1 ou 2, caractérisé en ce qu'au moins deux amortisseurs de vibrations à réglage de niveau sont montés en parallèle.

4. Métier à tisser à isolation anti-vibratoire selon les revendications 1 à 3, caractérisé en ce qu'il est prévu, comme amortisseurs de vibrations à réglage de niveau, des ressorts pneumatiques (22) qui sont reliés à une soupape de commande pneumatique (12), et il est prévu, à partir de la soupape de commande (12), des organes de détection (13, 14) qui enregistrent l'écartement (6) entre le métier (1) et la surface du sol (4).

5. Métier à tisser à isolation anti-vibratoire selon les revendications 1 à 4, caractérisé en ce qu'il est prévu, pour recevoir le poids de la machine, des ressorts en acier (11) disposés parallèlement aux ressorts pneumatiques (22), les ressorts pneumatiques (22) étant prévus eux-mêmes pour l'isolation anti-vibratoire et en particulier pour le réglage de niveau en fonction de la variation du poids de la chaîne.

6. Métier à tisser à isolation anti-vibratoire selon les revendications 1 à 5, caractérisé en ce que les éléments de réglage de niveau sont conçus comme des éléments hydrauliques avec un dispositif piston-cylindre dont le degré de remplissage est réglable en fonction du réglage de niveau souhaité.

7. Métier à tisser à isolation anti-vibratoire selon la revendication 6, caractérisé en ce que, en guise d'isolation anti-vibratoire, le vérin hydraulique s'appuie sur un coussin d'air supplémentaire ou contre un ressort supplémentaire.
